# EUROPEAN PATENT SPECIFICATION

(11) **EP 1 385 735 B1**
(45) Date of publication and mention of the grant of the patent: **09.02.2005**
(21) Application number: 02705660.5
(22) Date of filing: 19.03.2002
(51) Int. Cl.: B62D 61/12

(54) **ARRANGEMENT AND METHOD TO UNLOAD AUXILIARY WHEEL OF A MOTOR VEHICLE, AND A MOTOR VEHICLE**
ANORDNUNG UND VERFAHREN ZUM ENTLADEN EINES HILFSRADS EINES KRAFTFAHRZEUGS UND KRAFTFAHRZEUG
SYSTEME ET PROCEDE DESTINES A DECHARGER UNE ROUE AUXILIAIRE D'UN VEHICULE A MOTEUR, ET VEHICULE A MOTEUR

(30) Priority: 28.03.2001 SE 0101097
(43) Date of publication of application: 04.02.2004
(73) Proprietor: Scania CV AB, 151 87 Södertälje (SE)
(72) Inventor: RONVALL, Lars, S-641 35 (SE)
(86) International application number: PCT/SE2002/000518
(87) International publication number: WO 2002/085693

(56) References cited:
- DE-A1- 3 217 421
- US-A- 3 877 715
- US-A- 4 854 409

## Description

### BACKGROUND TO THE INVENTION, AND STATE OF THE ART

The present invention relates to an arrangement for automatic support wheel load relief on a powered vehicle according to the preamble to patent claim 1. The invention also relates to a vehicle according to the preamble to patent claim 10 and a method according to the preamble to patent claim 11.

A known practice is to use support wheels on heavier powered vehicles such as trucks and buses to distribute the weight of any load over more wheel axles. It is also known that when such a vehicle has to start moving or travel up steep hills on running surfaces with low friction its powered wheels may slip on the running surface, thereby limiting the possibility of driving the vehicle. This problem may be solved by relieving the load on support wheels, thereby increasing the pressure which applies the powered wheels to the running surface and hence providing more friction force between the powered wheels and the running surface. This is traditionally achieved on trucks by support wheels being raised by a lifting device intended for the purpose. This may, for example, involve using the arrangement described in WO99/55576 which shows the features of the preambles of the independent claims. In the case of buses, the pressure applying support wheels to the running surface may be reduced by decreasing the pressure in the air suspension of their axle. In certain cases, support wheel load relief may only be permissible at relatively low travel speeds depending on vehicle design and any relevant laws and regulations in the country where the vehicle is at the time.

Support wheel load relief was previously effected manually by the driver pressing buttons in the driving cab. This may cause the driver inconvenience in situations where he needs to concentrate on surrounding traffic.

Another patent concerning automatic support wheel load relief is US 4 677 557 referring to a vehicle with continuous support wheel load relief depending on the vehicle's load and braking capacity. Moreover, another patent, US 3 877 715, refers to automatic raising of an extra support wheel axle during braking. The amount of rise depends on the vehicle's load.

### SUMMARY OF THE INVENTION

The object of the present invention is to provide automatic support wheel load relief which takes into account the grip of the vehicle's wheels on the ground surface. It aims in particular at automatic support wheel load relief when the rotation speed of at least one wheel (other than support wheels) differs from the vehicle's travel speed. Said wheel may be a powered wheel, a steered wheel or any other wheel.

This object is achieved with the arrangement indicated in the introduction which is characterised by incorporating a control unit designed to automatically control said actuating device with reference to said parameter. The pressure acting on the powered axle can thus be influenced automatically without the vehicle driver having to pay attention to support wheel axle load relief. A further advantage may also be achieved with respect to time spent. Said automatic load relief arrangement and load relief method may involve a shorter time from detection of a deviation of said parameter to the desired load relief result than corresponding manual methods. Said load relief may nevertheless still be achieved by button pressing by the driver. Main wheel here means a wheel other than a support wheel. Unlike the previously mentioned patents US 4 677 557 and US 3 877 715 in which load relief depends on the vehicle's load and the braking procedure, load relief according to the present invention takes place upon detection of slipping of any of the wheels, thereby initiating load relief for the support wheels or the support wheel axle, and the vehicle's wheels gain a better grip.

According to a preferred embodiment of the invention, the control unit is designed to control the actuating device in such a way that the pressure acting upon the support wheels decreases when the value of said parameter indicates that this is required, e.g. when the value of said parameter exceeds a certain level. The pressure acting upon the main wheels may thus be increased so as to improve their grip on the running surface. The parameter value may thus be restored. The support wheels may also be reinstated after certain conditions, e.g. advantageously (but not necessarily) a certain time after load relief commenced.

According to a further preferred embodiment of the invention, said main wheels include at least one powered wheel and said parameter depends on the rotation speed of said powered wheel(s) relative to the vehicle's travel speed. This means that if one of the vehicle's powered wheels slips on the running surface, automatic load relief can be initiated to increase the pressure acting upon the powered wheel. This has the advantage of making it easier for the vehicle to start moving or travel up steep hills on running surfaces which present low friction.

According to a further preferred embodiment of the invention, the sensor arrangement incorporates at least one primary sensor designed to detect the rotation speed of the powered wheel, thereby creating the possibility of direct and hence reliable measurement of powered wheel rotation speed which may improve the accuracy of the sensor arrangement.

According to a further preferred embodiment of the invention, the sensor arrangement incorporates at least one secondary sensor designed to ascertain the vehicle's travel speed by detecting the rotation speed of an unpowered main wheel. This is an example of creating the possibility of accurate measurement of the travel speed.

In an advantageous application of the invention, the load relief arrangement is fitted to a heavy vehicle in cases where heavier vehicles mostly have more need of support wheels than lighter vehicles. The heavier vehicle may for example be a bus.

According to a further advantageous embodiment of the invention, the actuating device incorporates a pneumatically or hydraulically powered lifting means. Said lifting means may incorporate an air bellows, which may also constitute the support wheel suspension device.

The object may also be achieved with the vehicle indicated in the introduction which is characterised by incorporating a control unit designed to automatically control said actuating device in response to said parameter.

The object may further also be achieved with the method indicated in the introduction which is characterised by receiving and processing said parameter signal and automatic control of the actuating device by a control signal provided by the control unit. The sensor arrangement thus delivers a parameter signal which depends on said parameter and is received by a control unit which processes said parameter signal and delivers a control signal to the actuating device. The actuating device thereafter relieves the support wheel load in response to said control signal.

### BRIEF DESCRIPTION OF THE DRAWINGS

The present invention will now be explained in more detail on the basis of various embodiments described by way of examples with reference to the attached drawings.
- Fig. 1: depicts schematically a sideview of a heavy vehicle,
- Fig. 2: depicts schematically a first embodiment of an arrangement designed to automatically relieve the load on the support wheels of the vehicle in Fig. 1.
- Fig. 3: depicts schematically a second embodiment of an arrangement intended to automatically relieve the load on the support wheels.

### DETAILED DESCRIPTION OF VARIOUS EMBODIMENTS OF THE INVENTION

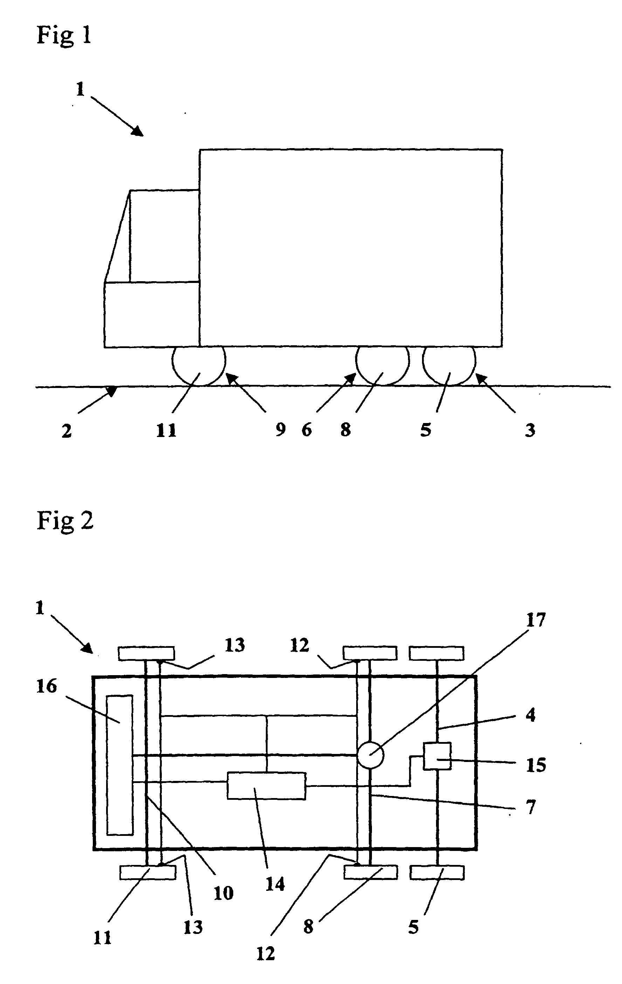

Figs. 1 and 2 depict a heavy powered vehicle 1 on a ground surface 2. The vehicle 1 incorporates a support wheel arrangement 3 which comprises a support wheel axle 4 with two support wheels 5, a first main wheel arrangement 6 incorporating a powered wheel axle 7 with powered wheels 8, and a second main wheel arrangement 9 incorporating a wheel axle 10 with two unpowered main wheels 11, e.g. steered wheels. In the present example, the vehicle 1 thus incorporates a total of four main wheels 8, 11. The vehicle 1 is not limited to incorporating two wheels of each wheel type but may for example incorporate one or several wheels of the same type. The vehicle 1 may also incorporate more than the three depicted wheel axles 4, 7, 10. The invention is suitable for all types of heavier vehicles with a support wheel axle or other extra wheel axle which is capable of being raised, e.g. trucks and buses. The invention would also be applicable to tandem-drive vehicles, e.g. vehicles with two powered axles where one of them is capable of being raised or being relieved of load.

When the vehicle 1 is travelling on a ground surface 2 with low friction, the grip of the powered wheels 8 on the ground surface 2 may be improved by relieving the load on the support wheels 5, which may be achieved by raising the support wheels 5 or by reducing the pressure which applies the support wheels 5 to the ground surface 2, thereby increasing the pressure which applies the main wheels 8, 11 to the ground surface 2 and their grip on said surface. The vehicle 1 may thus be driven in situations where, for example, the powered wheels 8 would otherwise slip, as in the case of starting to move or on uphill gradients where the ground surface 2 is slippery.

The vehicle 1 further incorporates an arrangement for automatic support wheel load relief which includes a sensor arrangement with a primary sensor 12 for each wheel 8 and a secondary sensor 13 for each wheel 11. The sensors 12, 13 are designed to continuously detect slipping between, for example, the powered wheels 8 and the ground surface 2. The arrangement for relieving the load on the support wheels or the support wheel axle also includes a control unit to which the sensor arrangement is connected, and an actuating device 15 which is itself connected to the control unit 14. The vehicle 1 further incorporates an engine 16 and a universal joint 17.

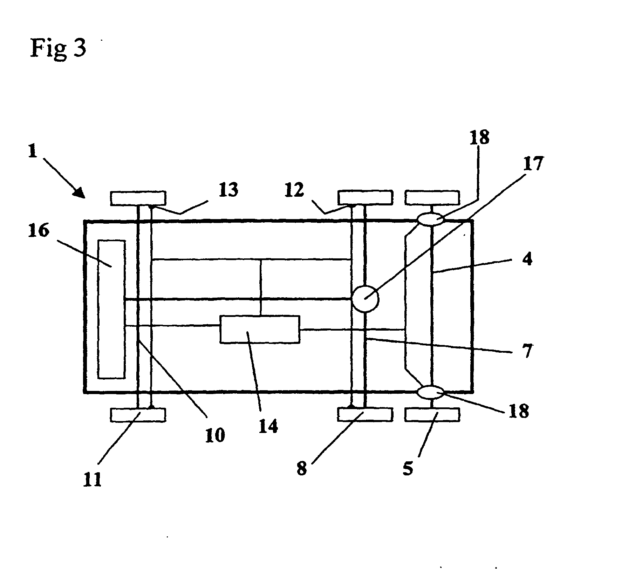

The control unit 14 receives from the sensors 12, 13 a parameter signal which it processes and passes on to the actuating device 15 in the form of a control signal. The actuating device 15 is designed to alter, in response to the control signal which is delivered by the control unit 14 and which is itself determined by the value of the parameter signal, the pressure which applies the support wheels 5 to the ground surface 2. The control unit 14 and the actuating device 15 are with advantage designed to continuously adapt the pressure acting upon the support wheels 5 to any slipping detected, so that the grip of, and the pressure acting upon, the powered wheels 8 can be continuously adapted to the ground surface 2. The actuating device 15 may also be designed to raise the support wheels 5 completely in response to said control signal. According to one embodiment, the actuating device 15 consists of the lifting arrangement described in WO99/55576 and depicted in Fig. 2. According to a further embodiment, the actuating device 15 consists of air bellows incorporated in the compressed air suspension 18 (depicted in Fig. 3) of the vehicle 1.

The sensors 12, 13 incorporated in the sensor arrangement are designed to detect the value of a parameter which depends on the rotation speed of at least one main wheel 8, 11 relative to the travel speed of the vehicle 1. In an advantageous version, the primary sensors 12 measure the rotation speeds of the powered wheels 8 and the secondary sensors 13 the rotation speeds of the unpowered main wheels 11. The parameter relationship may be obtained in various ways and the following are a number of non-limitative examples:
- Parameter depending on the difference in rotation speeds between two powered wheels 8 with the travel speed of the vehicle 1 as reference.
- Parameter depending on the difference between the rotation speed of at least one powered wheel 8 and the travel speed of the vehicle 1 with said travel speed as reference. The parameter may also be set to zero if the travel speed of the vehicle 1 exceeds a certain value.

In an advantageous version of the invention, said parameter depends on the difference between the rotation speeds of the two powered wheels 8. In this case the travel speed of the vehicle 1 is used as a reference speed whereby the travel speed can be estimated from the rotation speed of the unpowered main wheels 11. The reference speed is used for deciding whether the discrepancy between the rotation speeds of the powered wheels 8 is due to their slipping or is caused, for example, by the vehicle 1 turning. In the first case the discrepancy is due to a powered wheel 8 slipping on the ground surface 2 while the other powered wheel 8 continues to grip. In the second case the rotation speeds of the powered wheels 8 will be different because of the difference between the distances travelled by the right and left sides of the vehicle. On the basis of said reference it is possible to decide which case prevails at the time. As the design of the vehicle 1 may, as previously mentioned, impose limitations on the travel speeds at which load relief is permissible, it is also advantageous if the parameter is set to zero if the travel speed exceeds a certain specified level.

In one version of the invention, the control unit 14 may be integrated with the actuating device 15. In another version of the invention, the control unit 14 is not integrated with the actuating device 15 and the control unit 14 sends a control signal to the actuating device 15. In a further version the control unit 14 is not integrated with the actuating device 15 and does not send the control signal direct to the actuating device but to some other device such as a compressed air device which itself powers the actuating device 15.

The invention is not limited to the embodiments depicted but may be varied and modified within the scopes of the ensuing patent claims.

When a powered wheel 8 slips, its grip on the ground surface 2 may be restored if its rotational moment is reduced. This may be achieved by reducing the power extracted from the engine 16 and hence the power transmitted to the powered wheel 8. Known prior technology allows such engine deceleration on the vehicle 1 when slipping of any of the powered wheels 8 is detected. There is also a later known system for more efficient braking of a vehicle on slippery running surfaces, referred to as an ABS brake system. The technology of engine deceleration and ABS braking may with advantage be integrated with the present invention.

The control unit 14 may also be caused to continuously adjust the pressure which applies the support wheels 5 to the ground surface and said parameter in order to achieve optimum performance. The sensor arrangement may thus also be conceived as incorporating sensors designed to detect the nature of the ground surface.

The travel speed may also be measured in other ways within the scope of the invention, e.g. by GPS.

## Claims

1. An arrangement for automatic support wheel load relief on a powered vehicle (1) incorporating a support wheel arrangement (3) which includes at least one support wheel (5) capable of being applied to a ground surface (2) by an applied pressure, and a main wheel arrangement (6) which includes at least one main wheel (8, 11), which automatic support wheel load relief arrangement incorporates a device (15) designed to alter the pressure acting upon said support wheel (5), and a sensor arrangement (12, 13) designed to detect the value of a parameter which depends on the rotation speed of said main wheels (8, 11) relative to the vehicle's travel speed, **characterised by** incorporating a control unit (14) which is designed to automatically control said actuating device (15) in response to said parameter.

2. An arrangement according to claim 1, **characterised in that** the control unit (14) is designed to control the actuating device (15) in such a way that the applied pressure decreases when the value of said parameter indicates that this is required.

3. An arrangement according to claim 2, **characterised in that** at least one of said main wheels is a powered wheel (8) and said parameter depends on the rotation speed of said powered wheel(s) (8) relative to the vehicle's travel speed.

4. An arrangement according to claim 3, **characterised in that** the sensor arrangement includes at least one primary sensor (12) designed to detect the rotation speed of said powered wheel(s) (8).

5. An arrangement according to any one of claims 1-4, **characterised in that** the sensor arrangement includes at least one secondary sensor (13) designed to ascertain the vehicle's travel speed by detecting the rotation speed of at least one unpowered main wheel (11).

6. An arrangement according to any one of claims 1-5, **characterised in that** the vehicle (1) is a heavy vehicle.

7. An arrangement according to claim 6, **characterised in that** the vehicle (1) is a bus.

8. An arrangement according to any one of claims 1-7, **characterised in that** said actuating device (15) incorporates a pneumatically or hydraulically powered lifting means.

9. An arrangement according to claim 8, **characterised in that** said lifting means incorporates an air bellows (18).

10. A powered vehicle incorporating a support wheel arrangement (3) which includes at least one support wheel (5) which is capable of being applied to a ground surface (2) by an applied pressure, a main wheel arrangement (9) which includes at least one main wheel (8, 11), a device (15) designed to alter the pressure applied to said support wheel(s) (5), and a sensor arrangement (12, 13) designed to detect the value of a parameter which depends on the rotation speed of said main wheel(s) (8, 11) relative to the vehicle's travel speed, **characterised in that** the vehicle incorporates a control unit (14) designed to automatically control said actuating device (15) in response to said parameter.

11. A method for automatic support wheel load relief on a powered vehicle incorporating a support wheel arrangement which includes at least one support wheel which is capable of being applied to a ground surface by an applied pressure, a main wheel arrangement which includes at least one main wheel, an actuating device designed to alter the pressure applied to said support wheel(s), and a sensor arrangement which detects the value of a parameter which depends on the rotation speed of said main wheel(s) relative to the vehicle's travel speed, which sensor arrangement delivers a parameter signal, **characterised by**
- receiving and processing said parameter signal in a control unit and
- automatic control of the actuating device by a control signal delivered by the control unit.

12. A method according to claim 11, **characterised in that** the control unit is designed to control the actuating device in such a way that the applied pressure decreases when said parameter indicates that this is required.

## Patentansprüche

1. Anordnung für eine automatische Stützrad-Lastreduzierung an einem angetriebenen Fahrzeug (1), umfassend eine Stützradanordnung (3), die wenigstens ein Stützrad (5) umfasst, das dazu ausgelegt ist, durch einen angelegten Druck auf eine Untergrundoberfläche (2) aufgesetzt zu werden, und eine Hauptradanordnung (6), die wenigstens ein Hauptrad (8, 11) umfasst, wobei die automatische Stützrad-Lastreduzierungsanordnung eine Vorrichtung (15) aufweist, die dazu ausgelegt ist, den auf das Stützrad (5) wirkenden Druck zu verändern, und eine Sensoranordnung (12, 13) aufweist, die dazu ausgelegt ist, den Wert eines Parameters zu erfassen, der von der Drehzahl der Haupträder (8, 11) relativ zu der Bewegungsgeschwindigkeit des Fahrzeugs abhängt,
**gekennzeichnet durch** eine Steuereinheit (14), die dazu ausgelegt ist, automatisch die Betätigungsvorrichtung (15) in Antwort auf den Parameter anzusteuern.

2. Anordnung nach Anspruch 1, **dadurch gekennzeichnet, dass** die Steuereinheit (14) dazu ausgelegt ist, die Betätigungseinrichtung (15) derart anzusteuern, dass der angelegte Druck abnimmt, wenn der Wert des Parameters anzeigt, dass dies erforderlich ist.

3. Anordnung nach Anspruch 2, **dadurch gekennzeichnet, dass** wenigstens eines der Haupträder ein angetriebenes Rad (8) ist und dass der Parameter von der Drehzahl des angetriebenen Rades (der angetriebenen Räder) (8) relativ zu der Bewegungsgeschwindigkeit des Fahrzeugs abhängt.

4. Anordnung nach Anspruch 3, **dadurch gekennzeichnet, dass** die Sensoranordnung wenigstens einen primären Sensor (12) umfasst, der dazu ausgelegt ist, die Drehzahl des angetriebenen Rades (der angetriebenen Räder) (8) zu erfassen

5. Anordnung nach einem der Ansprüche 1-4, **dadurch gekennzeichnet, dass** die Sensoranordnung wenigstens einen sekundären Sensor (13) umfasst, der dazu ausgelegt ist, die Bewegungsgeschwindigkeit des Fahrzeugs zu bestimmen, indem er die Drehzahl wenigstens eines nicht angetriebenen Rades (11) erfasst.

6. Anordnung nach einem der Ansprüche 1-5, **dadurch gekennzeichnet, dass** das Fahrzeug (1) ein Lastfahrzeug ist.

7. Anordnung nach Anspruch 6, **dadurch gekennzeichnet, dass** das Fahrzeug (1) ein Bus ist.

8. Anordnung nach einem der Ansprüche 1-7, **dadurch gekennzeichnet, dass** die Betätigungsvorrichtung (15) pneumatisch oder hydraulisch angetriebene Hubmittel umfasst.

9. Anordnung nach Anspruch 8, **dadurch gekennzeichnet, dass** die Hubmittel einen Luftbalg (18) umfassen.

10. Angetriebenes Fahrzeug mit einer Stützradanordnung (3), die wenigstens ein Stützrad (5) aufweist, das dazu ausgelegt ist, auf einer Untergrundoberfläche (2) durch einen angelegten Druck aufgesetzt zu werden, einer Hauptradanordnung (9), die wenigstens ein Hauptrad (8, 11) umfasst, einer Vorrichtung (15), die zum Verändern des auf das Stützrad (die Stützräder) (5) angelegten Drucks ausgelegt ist, und einer Sensoranordnung (12, 13), die dazu ausgelegt ist, den Wert eines Parameters zu erfassen, der von der Drehzahl des Hauptrades (der Haupträder) (8, 11) relativ zu der Bewegungsgeschwindigkeit des Fahrzeugs abhängt, **dadurch gekennzeichnet, dass** das Fahrzeug eine Steuereinheit (14) umfasst, die dazu ausgelegt ist, automatisch die Betätigungsvorrichtung (15) in Antwort auf den Parameter anzusteuern.

11. Verfahren zur automatischen Stützrad-Lastreduzierung bei einem angetriebenen Fahrzeug, das umfasst: eine Stützradanordnung, die wenigstens ein Stützrad umfasst, das dazu ausgelegt ist, durch einen angelegten Druck auf eine Untergrundoberfläche aufgesetzt zu werden, eine Hauptradanordnung, die wenigstens ein Hauptrad umfasst, eine Betätigungsvorrichtung, die zum Verändern des an das Stützrad (die Stützräder) angelegten Druckes ausgelegt ist, und eine Sensoranordnung, die den Wert eines Parameters erfasst, der von der Drehzahl des Hauptrades (der Haupträder) relativ zu der Bewegungsgeschwindigkeit des Fahrzeugs abhängt, wobei die Sensoranordnung ein Parametersignal abgibt,
**gekennzeichnet durch**
- Empfangen und Verarbeiten des Parametersignals in einer Steuereinheit und
- automatisches Ansteuern der Betätigungsvorrichtung **durch** ein Steuersignal, das von der Steuereinheit abgegeben wird.

12. Verfahren nach Anspruch 11, **dadurch gekennzeichnet, dass** die Steuereinheit dazu ausgelegt ist, die Betätigungsvorrichtung derart anzusteuern, dass der angelegte Druck abnimmt, wenn der Parameter anzeigt, dass dies erforderlich ist.

## Revendications

1. Agencement pour atténuer automatiquement une charge de roue porteuse sur un véhicule à moteur (1) contenant un agencement de roue porteuse (3) qui comporte au moins une roue porteuse (5) pouvant être appliquée sur une surface de sol (2) par l'intermédiaire d'une pression exercée, et un agencement de roue principale (6) qui comporte au moins une roue principale (8, 11), lequel agencement d'atténuation automatique de charge de roue porteuse comporte un dispositif (15) conçu pour modifier la pression agissant sur ladite roue porteuse (5), et un agencement de capteurs (12, 13) conçu pour détecter la valeur d'un paramètre qui dépend de la vitesse de rotation desdites roues principales (8, 11) par rapport à la vitesse de déplacement du véhicule, **caractérisé par** l'incorporation d'une unité de commande (14) qui est conçue pour commander automatiquement ledit dispositif d'actionnement (15) en réponse audit paramètre.

2. Agencement selon la revendication 1, **caractérisé en ce que** l'unité de commande (14) est conçue pour commander le dispositif d'actionnement (15) d'une manière telle que la pression exercée diminue lorsque la valeur dudit paramètre indique que ceci est nécessaire.

3. Agencement selon la revendication 2, **caractérisé en ce qu'**au moins une desdites roues principales est une roue motrice (8), et ledit paramètre dépend de la vitesse de rotation de ladite ou desdites roue(s) motrice(s) (8) par rapport à la vitesse de déplacement du véhicule.

4. Agencement selon la revendication 3, **caractérisé en ce que** l'agencement de capteurs comporte au moins un capteur principal (12) conçu pour détecter la vitesse de rotation de ladite ou desdites roue(s) motrice(s) (8).

5. Agencement selon l'une quelconque des revendications 1 à 4, **caractérisé en ce que** l'agencement de capteurs comporte au moins un capteur secondaire (13) conçu pour garantir la vitesse de déplacement du véhicule en détectant la vitesse de rotation d'au moins une roue principale non-motrice (11).

6. Agencement selon l'une quelconque des revendications 1 à 5, **caractérisé en ce que** le véhicule (1) est un véhicule poids lourd.

7. Agencement selon la revendication 6, **caractérisé en ce que** le véhicule (1) est un autobus.

8. Agencement selon l'une quelconque des revendications 1 à 5, **caractérisé en ce que** ledit dispositif d'actionnement (15) contient des moyens de levage alimentés en puissance de manière pneumatique ou de manière hydraulique.

9. Agencement selon la revendication 8, **caractérisé en ce que** les moyens de levage comportent un soufflet pneumatique (18).

10. Véhicule à moteur incorporant un agencement de roue porteuse (3) qui comporte au moins une roue porteuse (5) qui peut être appliquée sur une surface de sol (2) par l'intermédiaire d'une pression exercée, un agencement de roue principale (9) qui comporte au moins une roue principale (8, 11), un dispositif (15) conçu pour modifier la pression exercée sur ladite ou lesdites roue(s) porteuse(s) (5), et un agencement de capteurs (12, 13) conçu pour détecter la valeur d'un paramètre qui dépend de la vitesse de rotation de ladite ou desdites roue(s) principale(s) (8, 11) par rapport à la vitesse de déplacement du véhicule, **caractérisé en ce que** le véhicule incorpore une unité de commande (14) conçue pour commander automatiquement ledit dispositif d'actionnement (15) en réponse audit paramètre.

11. Procédé pour atténuer automatiquement une charge de roue porteuse sur un véhicule à moteur contenant un agencement de roue de support qui comporte au moins une roue porteuse pouvant être appliquée sur une surface de sol par l'intermédiaire d'une pression exercée, un agencement de roue principale qui comporte au moins une roue principale, un dispositif d'actionnement pour modifier la pression appliquée sur ladite ou lesdites roue(s) porteuse(s), et un agencement de capteurs qui détecte la valeur d'un paramètre qui dépend de la vitesse de rotation de ladite ou desdites roue(s) principale(s) par rapport à la vitesse de déplacement du véhicule, lequel agencement de capteurs délivre un signal de paramètre, **caractérisé par** les étapes consistant à
recevoir et traiter ledit signal de paramètre dans une unité de commande, et
commander automatiquement le dispositif d'actionnement par l'intermédiaire d'un signal de commande délivré par l'unité de commande.

12. Procédé selon la revendication 11, **caractérisé en ce que** l'unité de commande est conçue pour commander le dispositif d'actionnement d'une manière telle que la pression exercée diminue lorsque ledit paramètre indique que ceci est nécessaire.
